# EUROPÄISCHE PATENTSCHRIFT

(11) **EP 1 449 686 B1**
(45) Veröffentlichungstag und Bekanntmachung des Hinweises auf die Patenterteilung: **20.09.2006**
(21) Anmeldenummer: 04003305.2
(22) Anmeldetag: 13.02.2004
(51) Int. Cl.: B60G 9/02, B60G 17/005, E02F 9/02, E02F 9/22, B60B 35/00

(54) **Verriegelungsvorrichtung für eine Fahrzeugpendelachse**
Vehicle oscillating axle locking device
Dispositif de verrouillage d'un essieu oscillant pour véhicules

(30) Priorität: 21.02.2003 DE 20302870 U
(43) Veröffentlichungstag der Anmeldung: 25.08.2004
(73) Patentinhaber: Ölhydraulik Altenerding Dechamps & Kretz GmbH & Co., 85435 Erding (DE)
(72) Erfinder: Giessibl, Johann, 83533 Edling (DE)
(74) Vertreter: Grünecker, Kinkeldey, Stockmair & Schwanhäusser Anwaltssozietät

(56) Entgegenhaltungen:
- EP-A- 0 603 394
- EP-A- 0 887 213
- DE-A- 2 058 557
- DE-U- 1 795 099
- US-A- 2 381 425
- US-A- 4 264 014
- US-A- 5 639 119

## Beschreibung

Die Erfindung betrifft eine Fahreinheit für Fahrzeuge, insbesondere Mobilbagger, mit den Merkmalen des Oberbegriffes des Anspruches 1.

Aus der Praxis sind Mobilbagger mit gattungsgemäßer Fahreinheit bekannt, bei denen eine Pendelachse mit Hilfe an einem Fahrgestell angebrachter Hydraulikzylinder in einer gewünschten Lage gegen ein Verschwenken gegenüber dem Fahrgestell gestützt bzw. verriegelt wird. Dabei sind an der Pendelachse ebene Auflageflächen vorgesehen, gegen die jeweils ein Ende einer Kolbenstange der Hydraulikzylinder drückt. In einer unverschwenkten Lage der Pendelachse sind eine Verfahrachse der Kolbenstange und die Ebene der Auflagefläche jeweils senkrecht zueinander. Derartige Fahreinheiten, wie sie auch die US 5 639 119 oder die DE 26 25 679 C2 schematisch andeutet, sind einfache, gute Lösungen, die sich in der Praxis bewährt haben. Weiterhin nimmt die DE 20 58 557 C2 auf eine derartige Fahreinheit Bezug und die DE 12 64 963 A betrifft einen Hydraulikzylinder für diese Fahreinheiten.

Bei Fahreinheiten, bei denen die Pendelachse einen größeren Schwenkbereich hat und/oder größere Belastungen auftreten, ist an den Hydraulikzylindern jedoch ein erhöhter Verschleiß festzustellen. Mitunter treten auch Deformationen des Hydraulikzylinders oder Beschädigungen auf, beispielsweise das Abreißen von Befestigungsschrauben.

Der Erfindung liegt die Aufgabe zugrunde, eine gattungsgemäße Fahreinheit so zu verbessern, dass die Hydraulikzylinder verschleißärmer sind und die Fahreinheit große Kräfte trotz einfacher Konstruktion besser aufnimmt.

Die Aufgabe wird erfindungsgemäß gelöst mit einer Fahreinheit mit den Merkmalen des Anspruches 1.

Die Verfahrachse und die Normale verlaufen winklig zueinander, wobei die Normale der Fahrgestellmitte näher zugeneigt ist. Dieser winklige Verlauf von Verfahrachse und Normale in unverschwenkter Lage der Pendelachse führt zu einem geringeren Winkel zwischen Verfahrachse und Normale in bezüglich des Fahrgestelles weit ausgeschwenkter Lage der Pendelachse. Durch das Verringern des Winkels zwischen Verfahrachse und Normale in ausgeschwenkter Lage der Pendelachse, ist die Querkraftkomponente reduziert, die auf den Hydraulikzylinder wirkt. Wenn mit Hilfe des Hydraulikzylinders eine Kraftbelastung zwischen Pendelachse und Fahrgestell zu übertragen ist, wird der Verschleiß am Hydraulikzylinder durch die erheblich verringerten Querkräfte deutlich reduziert. Obwohl mit dieser Konstruktion in unverschwenkter Lage und eingeschwenkter Lage größere Querkräfte auf den Zylinder wirken als beim Stand der Technik, wird insgesamt der bei ausgeschwenkter Lage auftretende Verschleiß des Zylinders reduziert.

In einer besonders bevorzugten Ausführungsform der Erfindung kann die Normale der Auflagefläche in unverschwenkter Lage der Pendelachse winklig zu einer Vertikalachse der Pendelachse verlaufen. Mit dieser konstruktiv einfach zu bewirkenden Anordnung der Auflagefläche lässt sich der an dem Hydraulikzylinder auftretende Verschleiß bereits wirksam reduzieren.

In einer Weiterbildung der Erfindung kann die Verfahrachse der Kolbenstange winklig zu einer Vertikalachse des Fahrgestelles verlaufen. Bereits durch das schräge Anordnen des Hydraulikzylinders wird ein Reduzieren der in ausgeschwenkter Lage auf den Hydraulikzylinder wirkenden Querkräfte erreicht. Verschleißerscheinungen werden dementsprechend reduziert.

Besonders bevorzugt können die Verfahrachse der Kolbenstange und die Normale der Auflagefläche in einer Schwenkebene der Pendelachse einen Winkel zwischen etwa 0° und 15° einschließen, vorzugsweise zwischen etwa 4° und 9°, insbesondere etwa 5° bis 6°. Bei diesen Winkelbereichen ist ein deutliches Reduzieren der in weit ausgeschwenkter Lage der Pendelachse auf den Hydraulikzylinder wirkenden Querkraftkomponente möglich. Gleichzeitig werden die in unverschwenkter oder zu dem Fahrgestell eingeschwenkter Lage der Pendelachse auftretenden Querkräfte gering gehalten. Dabei hat sich ein Winkelbereich von etwa 4° bis 9°, insbesondere von etwa 5° bis 6°, als besonders ideal und gut umsetzbar herausgestellt.

Schutz wird auch für Fahrzeuge, insbesondere Mobilbagger, mit einer Fahreinheit nach wenigstens einem der Ansprüche 1 bis 4 beansprucht.

Ausführungsformen der Erfindung sind in der Zeichnung dargestellt und werden nachfolgend erläutert. Es zeigen:
- Figur 1: eine Ansicht auf eine vordere Seite eines Mobilbaggers mit erfindungsgemäßer Fahreinrichtung einer ersten Ausführungsform,
- Figur 2: eine ausschnittsweise Ansicht auf eine vordere Seite der erfindungsgemäßen Fahreinheit aus Figur 1 und
- Figur 3: eine ausschnittsweise Ansicht auf eine vordere Seite einer erfindungsgemäßen Fahreinheit einer zweiten Ausführungsform.

Im Folgenden werden für gleiche Elemente stets gleiche Bezugszeichen verwendet. Um Wiederholungen zu vermeiden, wird auf zu den jeweiligen Elementen bereits erfolgte oder noch folgende Erläuterungen verwiesen.

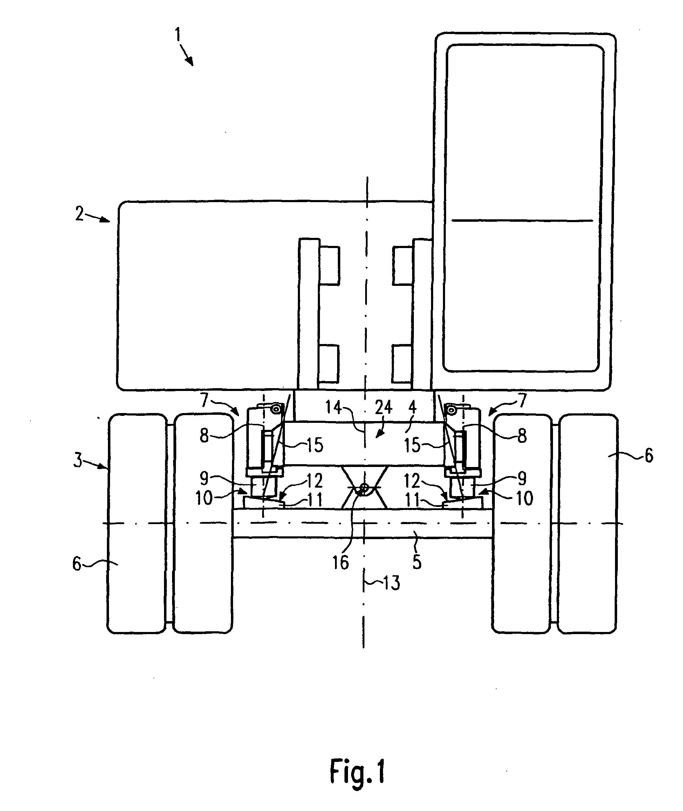

Figur 1 zeigt eine Ansicht auf eine vordere Seite eines Mobilbaggers 1 gemäß einer ersten Ausführungsform, mit einer erfindungsgemäßen Fahreinheit 3 der ersten Ausführungsform. Die Fahreinheit 3 kann in dieser Ausführungsform der Erfindung auch als Unterwagen bezeichnet werden. An Stelle des Mobilbaggers 1 können auch andere, eine Pendelachse aufweisende Fahrzeuge, wie z.B. Mobilkräne, Flurförderzeuge, insbesondere Gabelstapler, mit einer erfindungsgemäßen Fahreinheit ausgerüstet sein.

Der Mobilbagger 1 weist ein Fahrzeugoberteil 2 auf, das von der Fahreinheit 3 der ersten Ausführungsform aufgenommen ist. Das Fahrzeugoberteil 2 kann in dieser Ausführungsform der Erfindung auch als Oberwagen bezeichnet werden. Die Fahreinheit 3 weist ein Fahrgestell 4 und eine daran gelenkig aufgenommene Pendelachse 5 auf, an der beidseitig Räder 6 gelagert sind. Ein Schwenken der Pendelachse 5 erfolgt um ein Schwenkzentrum 16.

An dem Fahrgestell 4 sind beidseitig Hydraulikzylinder 7 mit entlang einer Verfahrachse 8 verfahrbaren Kolbenstangen 9 vorgesehen. Um die Pendelachse in einer gewünschte Lage zu stützen, sind die Kolbenstangen 9 jeweils unabhängig voneinander entlang der Verfahrachse 8 zu der Pendelachse 5 hin ausfahrbar. Die Pendelachse 5 weist Auflageelemente 11 auf, die jeweils eine ebene Auflagefläche 12 ausbilden. Auf den Auflageflächen 12 kommen abgerundete, in diesem Fall kugelkalottenförmige Kolbenstangenenden 10 der Kolbenstangen 9 zum Anliegen.

In Figur 1 ist die Pendelachse 5 in einer unverschwenkten Lage gezeigt. Eine Vertikalachse 13 der Pendelachse 5 und eine Vertikalachse 14 des Fahrgestelles 4 verlaufen dabei parallel zueinander. Die Fahreinheit 3 ist bei unverschwenkter Lage der Pendelachse 5 zu den Vertikalachsen 13, 14 symmetrisch. Wahlweise kann die Fahreinheit 3 auch asymmetrisch ausgebildet sein.

Die Auflageflächen 12 sind zu einer Fahrgestellmitte 24 hin geneigt ausgerichtet. Normalen 15 der Auflageflächen 12 verlaufen entsprechend jeweils winklig zu der Vertikalachse 13 der Pendelachse 5. Dabei sind die Normalen 15, in ihrem dargestellten, oberen Bereich, einer Fahrgestellmitte 24 näher zugeneigt als die jeweiligen Verfahrachsen 8.

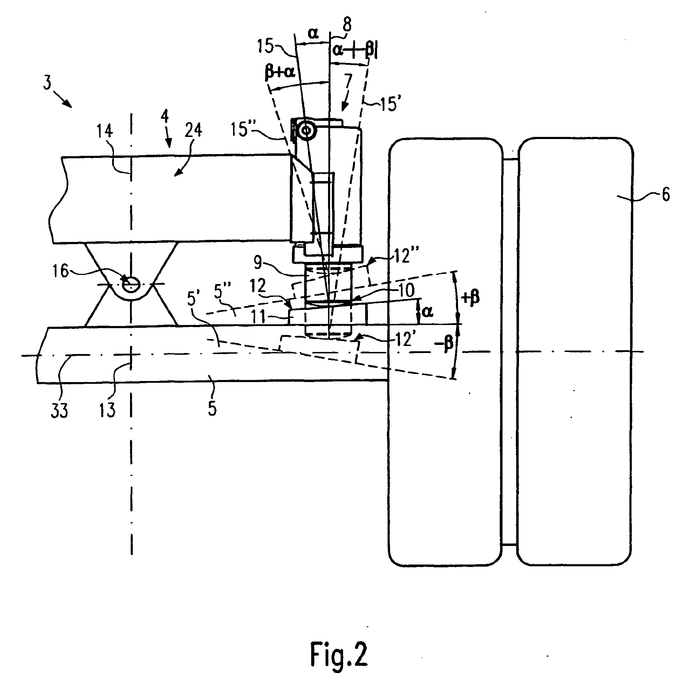

In Figur 2 ist eine ausschnittsweise vergrößerte Ansicht auf eine vordere Seite einer erfindungsgemäßen Fahreinheit 3 der ersten Ausführungsform der Erfindung gezeigt. Die nachfolgende Beschreibung bezieht sich auf den in Figur 2 dargestellten Teil der Fahreinheit 3.

In Figur 2 sind prinziphaft gegenüber dem Fahrgestell 4 verschwenkte Lagen der Pendelachse in gestrichelten Linien angedeutet. In einer ersten Lage ist die Pendelachse 5' um einen Schwenkwinkel -β von dem Fahrgestell weggeschwenkt und in einer zweiten Lage ist die Pendelachse 5" um einen Schwenkwinkel +β zu dem Fahrgestell 4 hingeschwenkt. Die Schwenkwinkel -β und +β haben gleiche Absolutbeträge. Ist die Pendelachse 5' um den Schwenkwinkel -β weggeschwenkt, befindet sie sich in einer gegenüber dem Fahrgestell 4 weit ausgeschwenkten Lage. Befindet sich die Pendelachse 5" in der um den Schwenkwinkel +β zu dem Fahrgestell 4 hingeschwenkten Lage, ist die Pendelachse 5" eingeschwenkt. Wenn der in Figur 2 gezeigte Teil der Pendelachse 5' ausgeschwenkt ist, ist der nicht gezeigte Teil der Pendelachse gegenüber dem Fahrgestell 4 eingeschwenkt und umgekehrt.

In der Schwenkebene der Pendelachse 5 gesehen, ist die ebene Auflagefläche 12 zu der Fahrgestellmitte 24 hin gegenüber einer Längsachse 33 der Pendelachse 5 um einen Neigungswinkel α geneigt. In einer unverschwenkten Lage der Pendelachse 5, in der eine Vertikalachse 13 der Pendelachse 5 parallel zu einer Vertikalachse 14 des Fahrgestelles 4 ist, ist eine Normale 15 der Auflagefläche 12 entsprechend um den Winkel α winklig zu der Verfahrachse 8 der Kolbenstange 9.

Durch die um den Neigungswinkel α gegenüber der Längsachse 33 geneigte Auflagefläche 12, schließt die Normale 15' gemäß der ersten Lage der Pendelachse 5' mit der Verfahrachse 8 einen Winkel von der Größe des Betrages des Neigungswinkels α verringert um den Absolutbetrag des Schwenkwinkels -β ein. Eine auf den Hydraulikzylinder 7 wirkende Querkraftkomponente ist von dem zwischen der jeweilige Normale 15' der Auflagefläche 12' und der Verfahrachse 8 eingeschlossenen Winkel abhängig. Durch das Verringern des zwischen der Normale 15' der Verfahrachse 8 eingeschlossenen Winkels, ist die auf den Hydraulikzylinder 7 wirkende Querkraftkomponente entsprechend geringer. Die geringere Querkraftkomponente zieht ein geringeres Maß an Reibkräften im Hydraulikzylinder 7 und damit verbundenen Verschleiß nach sich.

Der Neigungswinkel α hat eine Größe im Bereich zwischen etwa 0° und 15°.
Vorzugsweise hat der Neigungswinkel α Werte zwischen 4° und 9°, insbesondere etwa 5° bis 6°. In diesem Bereich ist die auf den Hydraulikzylinder 7 in ausgeschwenkter Lage der Pendelachse 5' wirkende Querkraftkomponente deutlich reduziert. Gleichzeitig werden bei unverschwenkter und eingeschwenkter Lage der Pendelachse 5, 5' auftretende Querkräfte hinreichend gering gehalten.

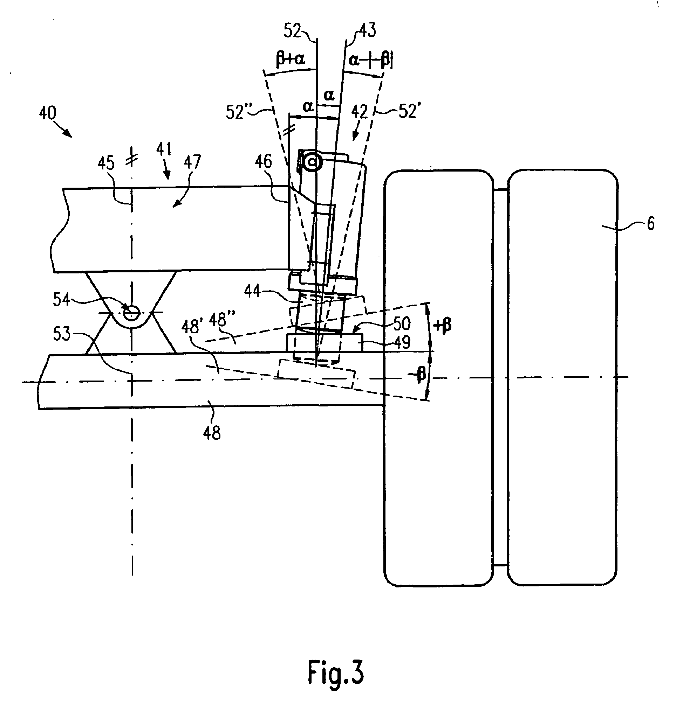

In Figur 3 ist eine Fahreinheit 40 einer zweiten Ausführungsform der Erfindung gezeigt. Die Fahreinheit 40 ist grundsätzlich symmetrisch aufgebaut. Wahlweise kann die Fahreinheit auch asymmetrisch aufgebaut sein. Die nachfolgende Beschreibung bezieht sich auf den in Figur 3 dargestellten Teil der Fahreinheit 40.

Die Fahreinheit 40 weist ein Fahrgestell 41 auf, an dem eine Pendelachse 48 gelenkig aufgenommen ist. Ein Schwenken der Pendelachse 48 erfolgt um ein Schwenkzentrum 54. Die Pendelachse 48 weist ein Auflageelement 49 mit einer Auflagefläche 50 auf. Eine Normale 52 der Auflagefläche 50 verläuft parallel zu einer Vertikalachse 53 der Pendelachse 48.

An dem Fahrgestell 41 ist ein Hydraulikzylinder 42 vorgesehen, der eine Kolbenstange 44 aufweist. Der Aufbau des Hydraulikzylinders 42 selbst ist analog zu dem Hydraulikzylinder 7 der ersten Ausführungsform. Jedoch ist der Hydraulikzylinder 42 der Fahreinheit 40 der zweiten Ausführungsform der Erfindung winklig an dem Fahrgestell 41 angeordnet. Dabei verläuft eine Verfahrachse 43 der Kolbenstange 44 in der Schwenkebene der Pendelachse 48 um einen Neigungswinkel α winklig zu einer Kante 46 des Fahrgestelles 41. Die Kante 46 verläuft parallel zu einer Vertikalachse 45 des Fahrgestelles 41. Die Normale 52 der Auflagefläche 50 ist dementsprechend in einem unverschwenkten Zustand der Pendelachse 48 um den Wert des Neigungswinkels α winklig zu der Verfahrachse 43. Der in Figur 3 gezeigte obere Teil der Normalen 52 verläuft dabei einer Fahrgestellmitte 47 näher zugeneigt als die Verfahrachse 43 der Kolbenstange 44.

Auch in Figur 3 sind prinziphaft zwei verschwenkte Zustände der Pendelachse 48 in gestrichelten Linien angedeutet. In einer ersten Schwenklage ist die Pendelachse 48' um den Schwenkwinkel -β von dem Fahrgestell 41 weggeschwenkt und befindet sich in einem weit ausgeschwenkten Zustand. In einer zweiten Schwenklage ist die Pendelachse 48" um den Schwenkwinkel +β zu dem Fahrgestell 41 hingeschwenkt und befindet sich daher in einem eingeschwenkten Zustand.

Gemäß der um den Neigungswinkel α weggeschwenkt ausgerichteten Verfahrachse 43, schließen die Normale 52' und die Verfahrachse 43 in der weggeschwenkten Lage der Pendelachse 48' einen Winkel der Größe des Betrages des Neigungswinkels α verringert um den Absolutbetrag des Schwenkwinkels -β miteinander ein. Der zwischen der Verfahrachse 43 und der Normalen 52' eingeschlossene Winkel ist für auf eine in einem Belastungsfall auf den Hydraulikzylinder 42 wirkende Querkraftkomponente maßgebend. Durch das Verringern dieses Winkels, ist eine auf den Hydraulikzylinder 42 wirkende Querkraftkomponente entsprechend reduziert. Die in weit ausgeschwenkter Lage der Pendelachse 48' durch die Querkräfte in dem Hydraulikzylinder 42 hervorgerufene Reibungskräfte und somit Reibungseffekte sind geringer.

Der Neigungswinkel α, um den die Verfahrachse 43 der Kolbenstange 44 von der Fahrgestellmitte 47 von der Vertikalachse 45 des Fahrgestelles 41 hinweggeschwenkt ist, hat einen Wert im Bereich zwischen etwa 0° und 15°. Vorzugsweise hat der Neigungswinkel α den Wert zwischen etwa 4° und 9°, insbesondere etwa 5° bis 6°. In diesem Bereich sind die in ausgeschwenktem Zustand der Pendelachse 48' auf den Hydraulikzylinder 42 wirkenden Querkräfte deutlich verringert. Gleichzeitig sind die in unverschwenktem oder eingeschwenktem Zustand der Pendelachse 48, 48" auftretenden Querkräfte gering gehalten.

In einer weiteren Ausführungsform der Erfindung kann sowohl eine Verfahrachse einer Kolbenstange in einer Schwenkebene einer Pendelachse winklig zu einer Vertikalachse des Fahrgestelles sein als auch eine Normale einer Auflagefläche bezüglich einer Vertikalachse der Pendelachse.

Es kann in der Praxis vorkommen, dass die Auflageflächen 12, 50 im Betrieb leicht eingedrückt werden. Dies ändert jedoch nichts an der grundsätzlich ebenen Geometrie der Auflageflächen 12, 50.

## Patentansprüche

1. Fahreinheit (3, 40) für Fahrzeuge, insbesondere Mobilbagger, mit einem Fahrgestell (4, 41), an welchem wenigstens eine Pendelachse (5, 48) gelenkig aufgenommen ist, wobei an dem Fahrgestell (4, 41) wenigstens ein Hydraulikzylinder (7, 42) mit verfahrbarer Kolbenstange (9, 44) vorgesehen ist, mit deren Kolbenstangenende (10) eine Kraft auf eine ebene Auflagefläche (12, 50) der Pendelachse ausübbar ist, um die Pendelachse in einer gewünschten Lage zu stützen,
**dadurch gekennzeichnet,**
**dass** in einer unverschwenkten Lage der Pendelachse eine Verfahrachse (8, 43) der Kolbenstange (9, 44) und eine Normale (15, 52) der Auflagefläche (12, 50) winklig zueinander verlaufen, wobei die Normale der Auflagefläche der Fahrgestellmitte (24, 47) näher zugeneigt ist als die Verfahrachse.

2. Fahreinheit nach Anspruch 1,
**dadurch gekennzeichnet**
**dass** die Normale (15) der Auflagefläche (12) in unverschwenkter Lage der Pendelachse winklig zu einer Vertikalachse (13) der Pendelachse (5) verläuft.

3. Fahreinheit nach einem der Ansprüche 1 oder 2,
**dadurch gekennzeichnet,**
**dass** die Verfahrachse (43) der Kolbenstange (44) winklig zu einer Vertikalachse (45) des Fahrgestelles (41) verläuft.

4. Fahreinheit nach wenigstens einem der vorhergehenden Ansprüche,
**dadurch gekennzeichnet,**
**dass** die Verfahrachse (8, 43) der Kolbenstange (9, 44) und die Normale (15, 52) der Auflagefläche (12, 50) in einer Schwenkebene der Pendelachse (5, 48) einen Winkel (α) zwischen etwa 0° und 15° einschließen, vorzugsweise von etwa 4° bis 9°, insbesondere von etwa 5° bis 6°.

5. Fahrzeug, insbesondere Mobilbagger, mit einer Fahreinheit (3, 40) nach wenigstens einem der Ansprüche 1 bis 4.

## Claims

1. Portable unit (3, 40) for vehicles, in particular mobile excavators, with a chassis (4, 41) on which at least one floating axle (5, 48) can be articulatingly accommodated, at least one hydraulic cylinder (7, 42) with a displaceable piston rod (9, 44) being provided on the chassis (4, 41), the piston rod end (10) of which is able to apply a force to a flat bearing surface (12, 50) of the floating axle in order to support the floating axle in a desired position,
**characterised in that**
when the floating axle is in a non-pivoted position, a displacement axis (8, 43) of the piston rod (9, 44) and a normal (15, 52) of the bearing surface (12, 50) extend at an angle with respect to one another and the normal of the bearing surface is inclined closer towards the chassis centre (24, 47) than the displacement axis.

2. Portable unit as claimed in claim 1,
**characterised in that**
when the floating axle is in a non-pivoted position, the normal (15) of the bearing surface (12) extends at an angle with respect to a vertical axis (13) of the floating axle (5).

3. Portable unit as claimed in one of claims 1 or 2,
**characterised in that**
the displacement axis (43) of the piston rod (44) extends at an angle with respect to a vertical axis (45) of the chassis (41).

4. Portable unit as claimed in at least one of the preceding claims,
**characterised in that**
the displacement axis (8, 43) of the piston rod (9, 44) and the normal (15, 52) of the bearing surface (12, 50) subtend an angle (α) of between approximately 0° and 15°, preferably approximately 4° to 9°, in particular approximately 5° to 6°, in a pivot plane of the floating axle (5, 48).

5. Vehicle, in particular a mobile excavator, with a portable unit (3, 40) as claimed in at least one of claims 1 to 4.

## Revendications

1. Unité de roulement (3, 40) pour véhicules, en particulier pour excavateurs mobiles, comprenant un châssis (4, 41) sur lequel est articulé au moins un essieu brisé (5, 48), étant précisé qu'il est prévu sur le châssis (4, 41) au moins un cylindre hydraulique (7, 42) avec une tige de piston mobile (9, 44) dont l'extrémité (10) permet d'exercer une force sur une surface d'appui plane (12, 50) de l'essieu brisé afin de supporter celui-ci dans une position voulue,
**caractérisée en ce que** lorsque l'essieu brisé n'a pas pivoté, un axe de déplacement (8, 43) de la tige de piston (9, 44) et une normale (15, 52) de la surface d'appui (12, 50) définissent un angle, la normale de la surface d'appui du centre de châssis (24, 47) étant plus inclinée que l'axe de déplacement.

2. Unité de roulement selon la revendication 1, **caractérisée en ce que** la normale (15) de la surface d'appui (12), lorsque l'essieu brisé n'a pas pivoté, définit un angle avec un axe vertical (13) de l'essieu brisé (5).

3. Unité de roulement selon la revendication 1 ou 2, **caractérisée en ce que** l'axe de déplacement (43) de la tige de piston (44) définit un angle avec un axe vertical (45) du châssis (41).

4. Unité de roulement selon l'une au moins des revendications précédentes, **caractérisée en ce que** l'axe de déplacement (8, 43) de la tige de piston (9, 44) et la normale (15, 52) de la surface d'appui (12, 50) définissent dans un plan de pivotement de l'essieu brisé (5, 48) un angle (α) situé entre environ 0° et 15°, de préférence d'environ 4° à 9°, plus spécialement d'environ 5° à 6°.

5. Véhicule, en particulier excavateur mobile, avec une unité de roulement (3, 40) selon l'une au moins des revendications 1 à 4.
